(19) Europäisches Patentamt
European Patent Office
Office européen des brevets

(11) **EP 4 071 655 A1**

(12) **EUROPEAN PATENT APPLICATION**
published in accordance with Art. 153(4) EPC

(43) Date of publication:
**12.10.2022 Bulletin 2022/41**

(21) Application number: **21912306.4**

(22) Date of filing: **29.06.2021**

(51) International Patent Classification (IPC):
*G06F 30/20* (2020.01)    *G01K 1/14* (2021.01)
*G06F 113/14* (2020.01)    *G06F 119/08* (2020.01)

(52) Cooperative Patent Classification (CPC):
Y02E 30/00; Y02E 30/30

(86) International application number:
**PCT/CN2021/103333**

(87) International publication number:
**WO 2022/147978 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.01.2021 CN 202110022763**

(71) Applicants:
• **China Nuclear Power Design Company Ltd.
(Shenzhen)
Shenzhen, Guangdong 518100 (CN)**
• **China Nuclear Power Engineering Co., Ltd.
Shenzhen, Guangdong 518124 (CN)**
• **Northeast Electric Power University
Jilin, Jilin 132000 (CN)**

(72) Inventors:
• **LING, Jun
Shenzhen, Guangdong 518124 (CN)**
• **MAO, Qing
Shenzhen, Guangdong 518124 (CN)**

• **LIU, Xin
Shenzhen, Guangdong 518124 (CN)**
• **CHEN, Weihua
Shenzhen, Guangdong 518124 (CN)**
• **CAI, Benan
Shenzhen, Guangdong 518124 (CN)**
• **HUANG, Weijun
Shenzhen, Guangdong 518124 (CN)**
• **TIAN, Jun
Shenzhen, Guangdong 518124 (CN)**
• **LIU, Lang
Shenzhen, Guangdong 518124 (CN)**
• **PENG, Huaqing
Shenzhen, Guangdong 518124 (CN)**
• **LUO, Yalin
Shenzhen, Guangdong 518124 (CN)**
• **LIU, Hongtao
Shenzhen, Guangdong 518124 (CN)**
• **ZHANG, Guihe
Shenzhen, Guangdong 518124 (CN)**

(74) Representative: **Westphal, Mussgnug & Partner,
Patentanwälte mbB
Werinherstraße 79
81541 München (DE)**

(54) **STRAIGHT PIPELINE INNER WALL SURFACE TEMPERATURE MEASUREMENT AND
TRANSIENT IDENTIFICATION METHOD AND COMPUTER TERMINAL**

(57) The present disclosure discloses a method for temperature measuring and transient identifying of an inner wall surface of a straight pipe, and a computer terminal, including: obtaining a measured temperature data of an outer wall surface of the pipe; and performing a thermal conduction inversion calculation by using a preset method based on the measured temperature data of the outer wall surface, to obtain a temperature data of the inner wall surface of the pipe. The disclosure can accurately obtain the temperature of the outer wall surface in real time without damaging the pipe of the primary loop, and calculate the temperature of the inner wall surface based on the thermal conductivity inversion analysis method, so as to provide reliable input data for the thermal stress calculation of fatigue assessment, so that the problems of repeated iteration and non convergence can be effectively avoided, the calculation time is short, the calculation amount is small, and the temperature information of the inner wall surface of the pipe can be accurately and quickly identified.

**(Cont. next page)**

obtaining a measured temperature data of an outer wall surface of the pipe — S101

performing a thermal conduction inversion calculation by using a preset method based on the measured temperature data of the outer wall surface, to obtain a temperature data of the inner wall surface of the pipe — S102

Fig. 1

**Description**

FIELD

The present disclosure relates to the technical field of pipe temperature testing, and more particularly, to a method for temperature measuring and transient identifying of an inner wall surface of a straight pipe, and a computer terminal.

BACKGROUND

In a process system of a nuclear power plant, a temperature fluctuation phenomenon is formed due to a mixing of cold fluid and hot fluid, a valve leakage, or the like, resulting in a large temperature gradient on an inner wall surface of a pipe, thereby a thermal stress is generated on the wall surface of the pipe, which may lead to expanding of an inherent damage defect of the pipe, inducing of a crack penetrating through the wall surface in the thickness direction thereof, and even resulting a structural thermal fatigue failure.

As the service time of the nuclear power plant is prolonged, the probability of occurrence of events such as cracks, coolant leakage and the like caused by gradual aging of material is increasing year by year. Therefore, it is very important to accurately acquire the temperature fluctuation information of the inner wall surface of the pipe for the thermal stress analysis and the thermal fatigue research of the pipe. However, due to the structural integrity and safety requirements of the primary loop of the nuclear power plant, it is not allowed to directly measure the temperature of the inner wall surface by opening holes on the pipe to install a temperature sensor therein. Therefore, an indirect and nondestructive heat conduction inversion analysis method is needed to obtain an input data source of the thermal fatigue analysis.

Currently, the analyses and calculations of the pipe mainly include a conjugate gradient method, a genetic algorithm, a numerical algorithm, and the like, as well as a least square method, a Bayesian method, a particle swarm method, a maximum entropy estimation method, and the like. The main idea of the above methods is to make a certain assumption on a quantity to be solved of an inverse problem, thereby forming a solution of a positive problem, and to re-rationally modify the quantity to be solved of the inverse problem according to the solution result, and iteratively and repeatedly modify until an expected value is reached. However, the iterative method is time-consuming, computationally expensive, relatively easy to produce oscillation and divergence, and difficult to meet the real-time output requirements of boundary conditions in practical engineering.

SUMMARY

The technical problem to be resolved by the present disclosure is to provide a method for temperature measuring and transient identifying of an inner wall surface of a straight pipe, and a computer terminal, for the defects in the related art.

A technical solution adopted by the present disclosure to resolve the technical problem is to provide a method for temperature measuring and transient identifying of an inner wall surface of a straight pipe, including:

obtaining a measured temperature data of an outer wall surface of the pipe; and

performing a thermal conduction inversion calculation by using a preset method based on the measured temperature data of the outer wall surface, to obtain a temperature data of the inner wall surface of the pipe.

In the method for temperature measuring and transient identifying of the inner wall surface of the straight pipe of the present disclosure, the obtaining the measured temperature data of the outer wall surface of the pipe includes:

obtaining a type of the pipe;

determining a measuring mode of a temperature measuring device according to the type of the pipe; and

performing a temperature measurement according to the measuring mode of the temperature measuring device, to obtain the measured temperature data of the outer wall surface.

In the method for temperature measuring and transient identifying of the inner wall surface of the straight pipe of the present disclosure, the types of the pipe include a first pipe, a second pipe, and a third pipe;

the first pipe is a pipe with a uniformly stirred state therein;

the second pipe is a pipe with a thermally stratified state therein; and

the third pipe is a pipe with partial fluid therein.

In the method for temperature measuring and transient identifying of the inner wall surface of the straight pipe of the present disclosure, the determining the measuring mode of the temperature measuring device according to the type of the pipe includes:

if the pipe is the first pipe, disposing one temperature measuring device respectively on the top and the bottom of the first pipe;

if the pipe is the second pipe, uniformly disposing a plurality of the temperature measuring devices on a side of the second pipe; and

if the pipe is the third pipe, disposing a plurality of the temperature measuring devices on the right side of the third pipe.

In the method for temperature measuring and transient identifying of the inner wall surface of the straight pipe of the present disclosure, before the performing the thermal conduction inversion calculation by using the preset method based on the measured temperature data of the outer wall surface, to obtain the temperature data of the inner wall surface of the pipe, the method further includes:
modifying the measured temperature data of the outer wall surface to obtain a modified measured temperature data of the outer wall surface of the pipe.
In the method for temperature measuring and transient identifying of the inner wall surface of the straight pipe of the present disclosure, the modifying the measured temperature data of the outer wall surface to obtain the modified measured temperature data of the outer wall surface of the pipe includes:

dividing temperature ranges;

determining modified values of different temperature ranges based on the divided temperature ranges; and

modifying the measured temperature data of the outer wall surface based on the modified values of different temperature ranges, to obtain the modified measured temperature data of the outer wall surface.

In the method for temperature measuring and transient identifying of the inner wall surface of the straight pipe of the present disclosure, the performing the thermal conduction inversion calculation by using the preset method based on the measured temperature data of the outer wall surface, to obtain the temperature data of the inner wall surface of the pipe includes:
performing an inverse-space gradually marching algorithm by a control volume method based on the modified measured temperature data of the outer wall surface, to obtain the temperature data of the inner wall surface of the pipe.
In the method for temperature measuring and transient identifying of the inner wall surface of the straight pipe of the present disclosure, the performing the inverse-space gradually marching algorithm by the control volume method based on the modified measured temperature data of the outer wall surface, to obtain the temperature data of the inner wall surface of the pipe includes:
conducting a node division on a wall of the pipe based on the temperature distribution of the wall of the pipe in a radial direction of the pipe, to obtain pipe nodes.
In the method for temperature measuring and transient identifying of the inner wall surface of the straight pipe of the present disclosure, the pipe nodes includes an outer wall node, an intermediate layer nodes, and an inner wall node;

the temperature data of the outer wall node is the modified measured temperature data of the outer wall surface; and

the temperature data of the inner wall node is the temperature data of the inner wall surface.

In the method for temperature measuring and transient identifying of the inner wall surface of the straight pipe of the present disclosure, the performing the inverse-space gradually marching algorithm by the control volume method based on the modified measured temperature data of the outer wall surface, to obtain the temperature data of the inner wall surface of the pipe includes:

obtaining energy conservation equations of the temperature data of the outer wall node, the temperature data of the intermediate layer nodes and the temperature data of the inner wall node, according to the law of energy conservation;

performing a derivation calculation based on the energy conservation equations and the temperature data of the outer wall node, to obtain a calculated temperature value of the inner wall surface of the pipe; and

modifying the calculated temperature value of the inner wall surface to obtain a modified temperature value of the inner wall surface of the pipe; the modified temperature value of the inner wall surface of the pipe being the temperature data of the inner wall surface of the pipe.

In the method for temperature measuring and transient identifying of the inner wall surface of the straight pipe of the present disclosure, the modifying the calculated temperature value of the inner wall surface to obtain the modified temperature value of the inner wall surface of the pipe includes:

modifying the temperature data of the outer wall node and a high-order derivative of the temperature data of the outer wall node versus time, to obtain a high-order modified value of the temperature data of the outer wall node; and

modifying the calculated temperature value of the inner wall surface of the pipe based on the high-order modified value of the temperature data of the outer wall node, to obtain the modified temperature value of the inner wall surface of the pipe.

In the method for temperature measuring and transient identifying of the inner wall surface of the straight pipe of the present disclosure after obtaining the temperature data of the inner wall surface of the pipe, the method further includes:
performing a transient identification on the temperature data of the inner wall surface of the pipe to obtain a transient load information of the inner wall surface of the pipe.

In the method for temperature measuring and transient identifying of the inner wall surface of the straight pipe of the present disclosure, the performing the transient identification on the temperature data of the inner wall surface of the pipe to obtain the transient load information of the inner wall surface of the pipe includes:

calculating a temperature change rate of the inner wall surface within a preset time interval based on the temperature data of the inner wall surface of the pipe;

judging whether the temperature change rate of the inner wall surface within the preset time interval meets a condition;

performing the transient identification by using a first identification method if the temperature change rate of the inner wall surface within the preset time interval meets a first preset condition; and

performing the transient identification by using a second identification method if the temperature change rate of the inner wall surface within the preset time interval meets a second preset condition.

In the method for temperature measuring and transient identifying of the inner wall surface of the straight pipe of the present disclosure, the temperature change rate of the inner wall surface within the preset time interval meets the first preset condition being that the temperature change rate of the inner wall surface within the preset time interval is greater than zero;
the temperature change rate of the inner wall surface within the preset time interval meets the second preset condition being that the temperature change rate of the inner wall surface within the preset time interval is less than zero.

In the method for temperature measuring and transient identifying of the inner wall surface of the straight pipe of the present disclosure, the performing the transient identification by using the first identification method if the temperature change rate of the inner wall surface within the preset time interval meets the first preset condition includes:
if the temperature change rate of the inner wall surface within the preset time interval is greater than zero, then:

determining the temperature at a first start time and the temperature at a first end time from the preset time interval;

obtaining a load time history based on the temperature at the first start time and the temperature at the first end time;

performing a linear processing based on the load time history, the temperature at the first start time and the temperature at the first end time, to obtain an interval temperature data between the temperature at the first start time and the temperature at the first end time;

performing an adjacent temperature data extraction based on the temperature at the first start time and the temperature at the first end time, to obtain an adjacent temperature data; and

obtaining a transient load information of the inner wall surface of the pipe based on the interval temperature data and the adjacent temperature data.

In the method for temperature measuring and transient identifying of the inner wall surface of the straight pipe of the present disclosure, the performing the linear processing based on the load time history, the temperature at the first start time and the temperature at the first end time includes:
performing a linear interpolation processing based on the load time history, the temperature at the first start time and the temperature at the first end time.

In the method for temperature measuring and transient identifying of the inner wall surface of the straight pipe of the present disclosure, the performing the adjacent temperature data extraction based on the temperature at the first start time and the temperature at the first end time, to obtain the adjacent temperature data includes:

obtaining the temperature data at two seconds before the first start time based on the temperature at the first start time; and

obtaining the temperature data at two seconds after the first end time based on the temperature at the first end time; the temperature data at the two seconds before the first start time and the temperature data at two seconds after the first end time being the adjacent temperature data.

In the method for temperature measuring and transient identifying of the inner wall surface of the straight pipe of the present disclosure, the performing the transient identification by using the second identification method if the temperature change rate of the inner wall surface within the preset time interval meets the second preset condition includes:
if the temperature change rate of the inner wall surface within the preset time interval is less than zero, then:

determining the temperature at a second start time and the temperature at a second end time from the preset time interval;

obtaining a load time history based on the temperature at the second start time and the temperature at the second end time;

performing a linear processing based on the load time history, the temperature at the second start time and the temperature at the second end time, to obtain an interval temperature data between the temperature at the second start time and the temperature at the second end time;

performing an adjacent temperature data extraction based on the temperature at the second start time and the temperature at the second end time, to obtain an adjacent temperature data; and

obtaining a transient load information of the inner wall surface of the pipe based on the interval temperature data and the adjacent temperature data.

In the method for temperature measuring and transient identifying of the inner wall surface of the straight pipe of the present disclosure, the performing the linear processing based on the load time history, the temperature at the second start time and the temperature at the second end time includes:
performing a linear interpolation processing based on the load time history, the temperature at the second start time and the temperature at the second end time.

In the method for temperature measuring and transient identifying of the inner wall surface of the straight pipe of the present disclosure, the performing the adjacent temperature data extraction based on the temperature at the second start time and the temperature at the second end time, to obtain the adjacent temperature data includes:

obtaining the temperature data at two seconds before the second start time based on the temperature at the second start time; and

obtaining the temperature data at two seconds after the second end time based on the temperature at the second end time; the temperature data at the two seconds before the second start time and the temperature data at two seconds after the second end time being the adjacent temperature data.

The present disclosure further provides a computer terminal, including a processor; and a memory; wherein the memory is configured to store a computer program, and the processor is configured to execute the computer program stored in the memory to realize the above method for temperature measuring and transient identifying of the inner wall surface of the straight pipe.

The present disclosure further provides a storage medium, in which a computer program is stored, wherein when the computer program is executed by a processor, the steps of realizing the above method for temperature measuring and transient identifying of the inner wall surface of the straight pipe are realized.

Through implementation of the method for temperature measuring and transient identifying of the inner wall surface of the straight pipe, and the computer terminal of the present disclosure, the following beneficial effects are achieved: including: obtaining a measured temperature data of an outer wall surface of the pipe; and performing a thermal conduction inversion calculation by using a preset method based on the measured temperature data of the outer wall surface, to obtain a temperature data of the inner wall surface of the pipe. The disclosure can accurately obtain the temperature of the outer wall surface in real time without damaging the pipe of the primary loop, and calculate the temperature of the inner wall surface based on the thermal conductivity inversion analysis method, so as to provide reliable input data for the thermal stress calculation of fatigue assessment, so that the problems of repeated iteration and non convergence can be effectively avoided, the calculation time is short, the calculation amount is small, and the temperature information of the inner wall surface of the pipe can be accurately and quickly identified.

BRIEF DESCRIPTION OF THE DRAWINGS

The present disclosure is further described below with reference to the accompanying drawings and embodiments. In the accompanying drawings:

FIG. 1 is a flow diagram of a method for temperature measuring and transient identifying of an inner wall surface of a straight pipe according to a first embodiment of the present disclosure;

Fig. 2 is a layout diagram of a temperature measuring device according to an embodiment of the present disclosure;

Fig. 3 is a design diagram of a metal temperature measuring tape according to an embodiment of the present disclosure;

Fig. 4 is a schematic diagram of a temperature modifying mechanism of an outer wall surface of the pipe according to an embodiment of the present disclosure;

Fig. 5 is a temperature distribution diagram of the temperatures of the wall surface of the pipe in a radial direction thereof according to an embodiment of the present disclosure;

Fig. 6 is a heat change diagram of node [3][4] per unit time according to an embodiment of the present disclosure;

Fig. 7 is a heat change diagram of node [2][4] per unit time according to an embodiment of the present disclosure;

Fig. 8 is a flow diagram of a method for temperature measuring and transient identifying of an inner wall surface of a straight pipe according to a second embodiment of the present disclosure;

Fig. 9 is a temperature history diagram of the inner wall surface of the pipe according to an embodiment of the present disclosure;

Fig. 10 is a temperature curve of transient a on the inner wall surface of the pipe; and

Figure 11 shows a temperature curve of transient b on the inner wall surface of the pipe.

DETAILED DESCRIPTION

In order to have a clearer understanding of the technical features, the objectives, and the effects of the present disclosure, specific implementations of the present disclosure are now illustrated in detail with reference to the accompanying drawings.

In the present disclosure, a real-time measured temperature information of an outer wall surface of a pipe is gradually advanced by adopting an inverse-space marching algorithm, so that a temperature field information of an inner wall surface of the pipe can be calculated, thereby repeated iteration is avoided, the calculation time and the calculation amount are saved, and the actual temperature transient information of the inner wall surface of the pipe can be quickly identified.

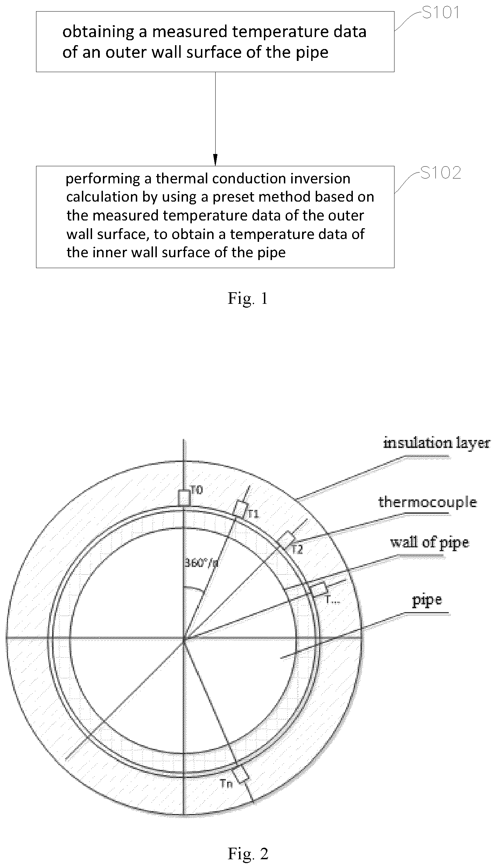

Referring to Fig. 1, Fig.1 is a flow diagram of a method for temperature measuring and transient identifying of an inner wall surface of a straight pipe according to a first embodiment of the present disclosure.

As shown in Fig. 1, the method for temperature measuring and transient identifying of the inner wall surface of the straight pipe includes:

Step S101, obtaining a measured temperature data of an outer wall surface of the pipe.

In some embodiments, the obtaining the measured temperature data of the outer wall surface of the pipe includes: obtaining the type of the pipe; determining a measuring mode of a temperature measuring device according to the type of the pipe; and measuring the temperature according to the measuring mode of the temperature measuring device, to obtain the measured temperature data of the outer wall surface.

Optionally, in the embodiment of the present disclosure, the types of the pipes may be divided into a first pipe, a second pipe, and a third pipe. Wherein, the first pipe is a pipe with a uniformly stirred state therein. Optionally, the pipe with the uniformly stirred state means that the pipe is filled with liquid or fluid, and temperatures of the liquid or the fluid are uniformly stirred. The second pipe is a pipe with a thermally stratified state therein. Optionally, the pipe with the thermally stratified state therein means that the pipe is filled with liquid or fluid, and temperatures of the liquid or the fluid are stratified. The third pipe is a pipe with partial fluid therein. Optionally, the pipe with partial fluid therein is a pipe that is not entirely filled with fluid.

In some embodiments, the determining the measuring mode of the temperature measuring device according to the type of the pipe includes: if the pipe is the first pipe, disposing a temperature measuring device respectively on the top and the bottom of the first pipe; if the pipe is the second pipe, uniformly disposing a plurality of temperature measuring devices on one side of the second pipe; if the pipe is the third pipe, disposing a plurality of temperature measuring devices on the right side of the third pipe. In the embodiment of the present disclosure, the temperature measuring device includes but is not limited to a thermocouple.

Optionally, due to the symmetry characteristic of the straight pipe, in order to save cost, the thermocouples can be installed on half side of the pipe to measure the temperature of the outer wall surface of the pipe. Therefore, optionally, the thermocouples may be arranged on the top and the bottom of the pipe if the pipe has the uniformly stirred state therein. A plurality of thermocouples may be uniformly arranged on one side of the pipe if the pipe has the thermally stratified state therein, wherein the more thermocouples are arranged, the higher the inversion accuracy is. If the pipe is only partially filled with the fluid (such as one third of the pipe is filled with the fluid, or one quarter of the pipe is filled with the fluid, or one fifth of the pipe is filled with the fluid, etc.), a plurality of thermocouples (such as five thermocouples, or six thermocouples, or seven thermocouples, etc.) can be arranged on the right side of the pipe. However, it can be understood that in other embodiments, only one thermocouple can be arranged.

Fig. 2 is a layout diagram of the thermocouples of a specific embodiment. In Fig. 2, the pipe is the second pipe. Wherein, Fig. 2 only takes the right side of the pipe as an example. Of course, the thermocouples can alternatively be arranged on the left side of the pipe. That is, the left side of the pipe can be selected for temperature detection, or the right side of the pipe can be selected for temperature detection.

In a specific embodiment, as shown in Fig. 2, seven thermocouples are arranged on the right side of the pipe, wherein the Tn in Fig. 2 is T7, and each two adjacent thermocouples are 30 ° apart.

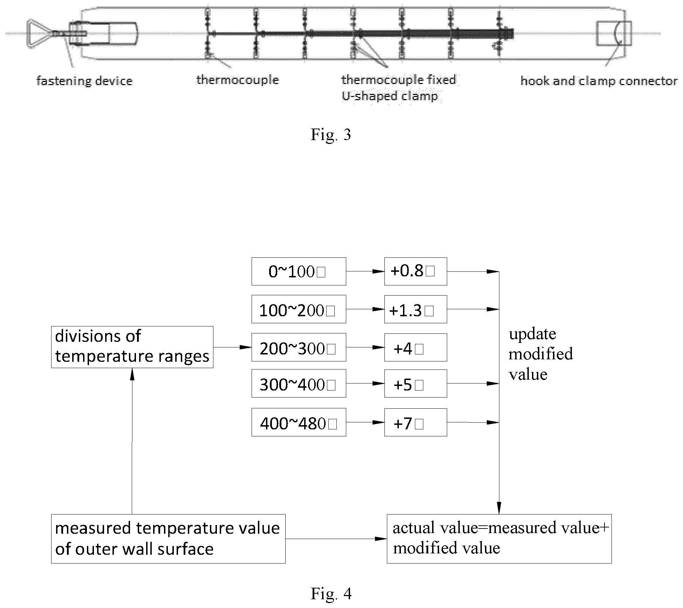

Further, since the thermocouples can not be directly welded on the nuclear-grade pipe, in the embodiment of the present disclosure, the thermocouples can be welded on a stainless steel temperature measuring tape with a thickness of 1.0mm, and then the measuring tape can be tightly fixed to the pipe through a clamp hoop device. See Fig. 3 for details.

As shown in Fig. 3, the thermocouples and the stainless steel temperature measuring tape can be connected by silver welding, the thermocouple fixed U-shaped clamp and the stainless steel temperature measuring tape can be connected by oxygen arc welding, the fastening device at two ends of the stainless steel measuring tape can adopt a hook and clamp connector that is easy to be disassembled, and the fastening device is further provided with an adjusting thread and a spring.

Further, in some embodiments, in order to eliminate the influence of the temperature of the outer wall surface on the measurement result, the measured temperature data of the outer wall surface can be modified in the embodiment of the present disclosure.

That is, before performing a thermal conduction inversion calculation by using a preset method based on the measured temperature data of the outer wall surface to obtain a temperature data of the inner wall surface of the pipe, the measured temperature data of the outer wall surface is modified to obtain a modified measured temperature data of the outer wall surface of the pipe.

In some embodiments, the modifying the measured temperature data of the outer wall surface to obtain the modified measured temperature data of the outer wall surface of the pipe includes: dividing temperature ranges; determining modified values of different temperature ranges according to the divided temperature range; modifying the measured temperature data of the outer wall surface based on the modified values of different temperature ranges, to obtain the modified measured temperature data of the outer wall surface.

Wherein, a modifying mechanism may refer to Fig. 4. As shown in Fig. 4, if the measured temperature of the outer wall surface is $T_{ome}$, the modified measured temperature of the outer wall surface is $T_{omo}$, then:
When Tome is 0~100°C, then $T_{omo}$ = Tome + 0.8°C; when Tome is 100~200°C, then Tomo = Tome + 1.3°C; when Tome is 200~300°C, then Tomo = Tome + 4°C; when Tome is 300~400°C, then Tomo = Tome + 5°C; when Tome is 400~480°C, then Tomo = Tome + 7°C.

Step S102, performing a thermal conduction inversion calculation by using a preset method based on the measured temperature data of the outer wall surface to obtain a temperature data of the inner wall surface of the pipe.

In some embodiments, the performing the thermal conduction inversion calculation by using the preset method based on the measured temperature data of the outer wall surface to obtain a temperature data of the inner wall surface of the pipe includes: performing an inverse-space gradually marching algorithm by a control volume method based on the modified measured temperature data of the outer wall surface, to obtain the temperature data of the inner wall surface of the pipe.

Further, in some embodiments, before the performing the inverse-space gradually marching algorithm by the control volume method based on the modified measured temperature data of the outer wall surface, to obtain the temperature data of the inner wall surface of the pipe, the method further includes: conducting a node division on the wall of the pipe according to the distribution of the temperatures of the wall of the pipe in the radial direction of the pipe, to obtain pipe nodes.

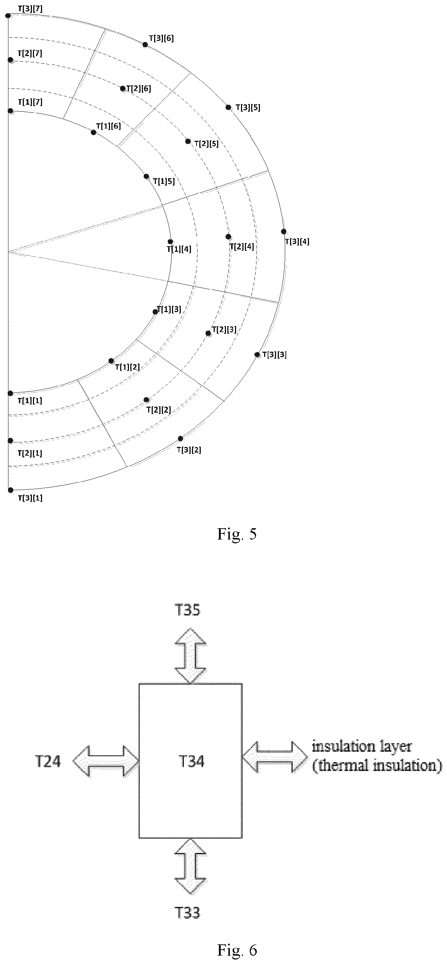

Optionally, according to the distribution of the temperatures of the wall of the pipe in the radial direction of the pipe, the pipe nodes can be divided into: an outer wall node, an intermediate layer node, and an inner wall node. Wherein, the temperature data of the outer wall node is the modified measured temperature data of the outer wall surface; the temperature data of the inner wall node is the temperature data of the inner wall surface. Of course, it is understandable that the temperature data of the intermediate layer node is the temperature of the intermediate layer node. The division of the pipe nodes is shown in Fig. 5.

As shown in Fig. 5, node [3][1], node [3][2], node [3][3], node [3][4], node [3][5], node [3][6], and node [3][7] are located on the outer wall surface that is facilitated to be measured. T[3][1], T[3][2], T[3][3], T [3][4], T[3][5], T[3][6], and T[3][7] are the temperature data of the outer wall surface measured by the thermocouples arranged on the outer wall surface of the pipe.

Node [1][1], node [1][2], node [1][3], node [1][4], node [1][5], node [1][6], and node [1][7] are located on the inner wall surface of the pipe. T[1][1], T[1][2], T[1][3], T[1][4], T[1][5], T[1][6], and T[1][7] are the temperature data of the inner wall surface of the pipe in the present disclosure.

Node [2][1], node [2][2], node [2][3], node [2][4], node [2][5], node [2][6], and node [2][7] are intermediate layer nodes of the pipe. Theoretically, the more layers are distinguished, the higher the calculation precision is, but the corresponding calculation amount is also increased. In the embodiment of the disclosure, the pipe is divided into three layers: the outer wall layer, the intermediate layer and the inner wall layer.

In some embodiments, the performing the inverse-space gradually marching algorithm by the control volume method based on the modified measured temperature data of the outer wall surface, to obtain the temperature data of the inner wall surface of the pipe includes: according to the law of energy conservation, obtaining an energy conservation equation of the temperature data of the outer wall node, the temperature data of the intermediate layer node and the temperature data of the inner wall node; performing a derivation calculation based on the energy conservation equation and the temperature data of the outer wall node, to obtain a calculated temperature value of the inner wall surface of the pipe; modifying the calculated temperature value of the inner wall surface to obtain a modified temperature value of the inner wall surface of the pipe; the modified temperature value of the inner wall surface of the pipe is the temperature data of the inner wall surface of the pipe.

Specifically, as shown in Fig. 5, in order to solve T[1][4], according to the law of energy conservation, the energy conservation equations of node [3][3], node [3][4] and node [3][5] are listed respectively. Specifically, taking node [3][4] as an example, the heat change diagram per unit time of node [3][4] is shown in Fig. 6.

Wherein, the heat change per unit time of the node [3][4] per unit volume = the heat transferred per unit time from the node [3] [3] per unit volume to the node [3] [4] per unit volume + the heat transferred per unit time from the node [3][5] per unit volume to the node [3][4] per unit volume + the heat transferred per unit time from the node [2][4] per unit volume to the node [3][4] per unit volume - the heat transferred from the external environment to the outer wall.

Similarly, the heat change per unit time of the node [3][3] per unit volume = the heat transferred per unit time from the node [3][2] per unit volume to the node [3][3] per unit volume + the heat transferred per unit time from the node [3][4] per unit volume to the node [3][3] per unit volume + the heat transferred per unit time from the node [2][3] per unit volume to the node [3][3] per unit volume - the heat transferred from the external environment to the outer wall.

Similarly, the heat change per unit time of the node [3][5] per unit volume = the heat transferred per unit time from the node [3][4] per unit volume to the node [3][5] per unit volume + the heat transferred per unit time from the node [3][6] per unit volume to the node [3][5] per unit volume + the heat transferred per unit time from the node [2][5] per unit volume to the node [3][5] per unit volume - the heat transferred from the external environment to the outer wall.

Based on the above energy conservation equations, the expressions of T[2][3], T[2][4], and T[2][5] can be obtained respectively.

Next, the energy conservation equation is listed at node [2][4]:

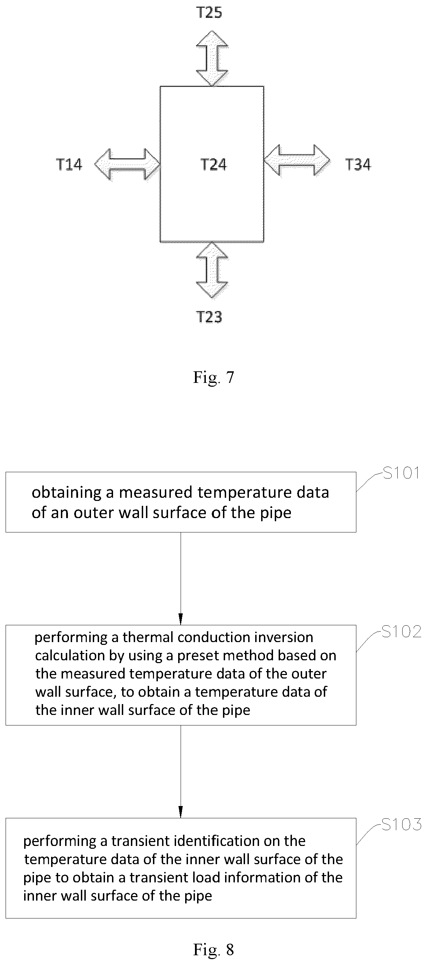

Heat change per unit time of node [2][4] per unit volume = heat transferred per unit time from node [2][3] per unit volume to node [2][4] per unit volume + heat transferred per unit time from node [2] [5] per unit volume to node [2][4] per unit volume + heat transferred per unit time from node [3][4] per unit volume to node [2] [4] per unit volume + heat transferred per unit time from node [1][4] per unit volume to node [2][4] per unit volume. Wherein, the heat change diagram per unit time of node [2][4] is shown in Fig. 7.

Based on the above energy conservation equation, the temperature of node [1][4] can be derived, so as to obtain the temperature of node [1][4] on the inner wall surface, that is, T[1][4]. The mathematical expression can be expressed as:

For T[1][4]:

First, the energy conservation equations at node [3][3], node [3][4], and node [3][5] are listed:

$$cp\frac{\Delta\varphi}{2}(r_5^2 - r_4^2)\frac{dT[3][3]}{dt} = k\frac{T[3][2]-T[3][3]}{\Delta\varphi r_5}\frac{\Delta r}{2} + k\frac{T[2][3]-T[3][3]}{\Delta r}\Delta\varphi r_4 + k\frac{T[3][4]-T[3][3]}{\Delta\varphi r_5}\frac{\Delta r}{2} - q[3][3]\Delta\varphi r_5$$

$$cp\frac{\Delta\varphi}{2}(r_5^2 - r_4^2)\frac{dT[3][4]}{dt} = k\frac{T[3][3]-T[3][4]}{\Delta\varphi r_5}\frac{\Delta r}{2} + k\frac{T[2][4]-T[3][4]}{\Delta r}\Delta\varphi r_4 + k\frac{T[3][5]-T[3][4]}{\Delta\varphi r_5}\frac{\Delta r}{2} - q[3][4]\Delta\varphi r_5 \quad (1)$$

$$cp\frac{\Delta\varphi}{2}(r_5^2 - r_4^2)\frac{dT[3][5]}{dt} = k\frac{T[3][4]-T[3][5]}{\Delta\varphi r_5}\frac{\Delta r}{2} + k\frac{T[2][5]-T[3][5]}{\Delta r}\Delta\varphi r_4 + k\frac{T[3][6]-T[3][5]}{\Delta\varphi r_5}\frac{\Delta r}{2} - q[3][5]\Delta\varphi r_5$$

The expressions of T[2][3], T[2][4], and T[2][5] can be obtained as follows:

$$T[2][3] = T[3][3] + \frac{\Delta r(r_5^2 - r_4^2)}{2\alpha r_4}\frac{dT[3][3]}{dt} - \frac{(\Delta r)^2}{2r_4 r_5(\Delta\varphi)^2}(T[3][2] - 2T[3][3] + T[3][4]) + \frac{r_5\Delta r}{r_4 k}q[3][3]$$

$$T[2][4] = T[3][4] + \frac{\Delta r(r_5^2 - r_4^2)}{2\alpha r_4}\frac{dT[3][4]}{dt} - \frac{(\Delta r)^2}{2r_4 r_5(\Delta\varphi)^2}(T[3][3] - 2T[3][4] + T[3][5]) + \frac{r_5\Delta r}{r_4 k}q[3][4] \quad (2)$$

$$T[2][5] = T[3][3] + \frac{\Delta r(r_5^2 - r_4^2)}{2\alpha r_4}\frac{dT[3][3]}{dt} - \frac{(\Delta r)^2}{2r_4 r_5(\Delta\varphi)^2}(T[3][2] - 2T[3][3] + T[3][4]) + \frac{r_5\Delta r}{r_4 k}q[3][5]$$

Then, the energy conservation equation at node [2][4] is listed:

$$cp\frac{\Delta\varphi}{2}(r_4^2 - r_2^2)\frac{dT[2][4]}{dt} = k\frac{T[2][3]-T[2][4]}{\Delta\varphi r_3}\frac{\Delta r}{2} + k\frac{T[3][4]-T[2][4]}{\Delta r}\Delta\varphi r_4$$

$$+ k\frac{T[2][5]-T[2][4]}{\Delta\varphi r_3}\frac{\Delta r}{2} + k\frac{T[1][4]-T[2][4]}{\Delta r}\Delta\varphi r_2 \quad (3)$$

The expression of T[1][4] can be obtained as follows:

$$T[1][4] = \frac{\Delta r(r_4^2 - r_2^2)}{2\alpha r_2} \frac{dT[2][4]}{dt} - \frac{(\Delta r)^2}{r_2 r_3 (\Delta\varphi)^2} (T[2][3] - 2\,T[2][4] + T[2][5])$$

$$+ T[2][4](1 + \frac{r_4}{r_2}) - \frac{r_4}{r_2} T[3][4] \qquad (4)$$

Substituting formula (1), formula (2) and formula (3) into formula (4), to obtain T[1][4]:

$$T[1][4] = T[3][4] + [\frac{(r_4^2 - r_2^2)}{r_2} + (r_5^2 - r_4^2)(\frac{1}{r_4} + \frac{1}{r_2})] \frac{\Delta r}{2\alpha} \frac{dT[3][4]}{dt} + \frac{(\Delta r)^2 (r_5^2 - r_4^2)(r_4^2 - r_2^2)}{4\alpha^2 r_2 r_4} \frac{d^2 T[3][4]}{dt^2}$$

$$- \frac{(\Delta r)^3}{2 r_2 r_4 (\Delta\varphi)^2} \times [\frac{(r_5^2 - r_4^2)}{r_3} + \frac{(r_4^2 - r_2^2)}{2 r_5}](\frac{dT[3][3]}{dt} - 2\frac{dT[3][4]}{dt} + \frac{dT[3][5]}{dt}) -$$

$$\frac{(\Delta r)^2}{(\Delta\varphi)^2}(\frac{1}{2 r_4 r_5} + \frac{1}{2 r_2 r_5} + \frac{1}{r_2 r_3})(T[3][3] - 2\,T[3][4] + T[3][5]) + \frac{(\Delta r)^2}{r_2 r_3 (\Delta\varphi)^2}[\frac{(\Delta r)^2}{r_4 r_5 (\Delta\varphi)^2} \qquad (5)$$

$$(\frac{1}{2} T[3][2] - 2\,T[3][3] + 3\,T[3][4] - 2\,T[3][5] + \frac{1}{2} T[3][6]) - \frac{r_5 \Delta r}{r_4 k}(q[3][3] - 2\,q[3][4] +$$

$$q[3][5])] + \frac{r_5 \Delta r}{k}(\frac{1}{r_4} + \frac{1}{r_2}) q[3][4] + \frac{(\Delta r)^2 (r_4^2 - r_2^2) r_5}{2\alpha r_2 r_4 k} \frac{dq[3][4]}{dt}$$

Similarly, T[1][1], T[1][2], T[1][3], T[1][5], T[1][6], and T[1][7] can be obtained.

Furthermore, under the condition that the temperature of the outer wall surface of the pipe is known, when calculating the temperature distribution of each layer of the pipe wall layer by layer, the error caused by the change of the temperature value with time is amplified layer by layer, resulting in a large deviation between the calculated value and the actual value of the temperature of the inner wall surface of the pipe. Therefore, in order to reduce the error, the measured temperature value of the outer wall surface (i.e. the temperature data of the outer wall node) and the higher-order derivative of the temperature of the outer wall surface versus time are modified before calculation in the embodiment of the disclosure. That is, the modifying the calculated temperature value of the inner wall surface to obtain the modified temperature value of the inner wall surface of the pipe includes: modifying the temperature data of the outer wall node and a high-order derivative of the temperature data of the outer wall node versus time, to obtain a high-order modified value of the temperature data of the outer wall node; modifying the calculated temperature value of the inner wall surface of the pipe based on the high-order modified value of the temperature data of the outer wall node, to obtain the modified temperature value of the inner wall surface of the pipe.

Specifically, assuming that the temperature measuring points on the outer wall are uniformly distributed in time and in space, regarding the pipe as a regular circular pipe with a temperature distribution symmetrical about the Y axis. The modified value St (t, n, j) of T (t, n, j) is related to the temperature values of the front 3 points and the back 3 points (a total of 7 space points) adjacent to the j point on the outer wall. The expressions for solving the high-order modified values of each temperature measuring points on the outer wall are as follows:

St[t][3][1]=(39T[t][3][1]+8T[t][3][2]-4T[t][3][3]-4T[t][3][4]+T[t][3][5]+4T[t][3][6]-2T[t][3][7])/42;

St[t][3][2]=(8T[t][3][1]+19T[t][3][2]+16T[t][3][3]+6T[t][3][4]-4T[t][3][5]-7T[t][3][6]+4T[t][3][7] )/42;

St[t][3][3]=(-4T[t][3][1]+16T[t][3][2]+19T[t][3][3]+12T[t][3][4]+2T[t][3][5]-4T[t][3][6]+T[t][3][7] )/42;

St[t][3][4]=(-2T[t][3][1]+3T[t][3][2]+6T[t][3][3]+7T[t][3][4]+6T[t][3][5]+3T[t][3][6]-2T[t][3][7] )/21;

St[t][3][5]=(T[t][3][1]-4T[t][3][2]+2T[t][3][3]+12T[t][3][4]+19T[t][3][5]+16T[t][3][6]-4T[t][3][7] )/42;

St[t][3][6]=(4T[t][3][1]-7T[t][3][2]-4T[t][3][3]+6T[t][3][4]+16T[t][3][5]+19T[t][3][6]+8T[t][3][7] )/42;

St[t][3][7]=(-2T[t][3][1]+4T[t][3][2]+T[t][3][3]-4T[t][3][4]-4T[t][3][5]+8T[t][3][6]+39T[t][3][7] )/42.

Then, the expression of temperature derivative term is derived by combining the higher-order modified value of each node on the outer wall at each time point with the adjacent past 5 time points and the adjacent future 5 time points (a total of 11 time points):

$$
\begin{aligned}
f'[t][3][j] = \frac{1}{5148\Delta t}(&300\,st[t-5\Delta t][3][j] - 294\,st[t-4\Delta t][3][j] - 532\,st[t-3\Delta t][3][j] \\
&- 503\,st[t-2\Delta t][3][j] - 296\,st[t-\Delta t][3][j] + 296\,st[t+\Delta t][3][j] + 503\,st[t+2\Delta t][3][j] \\
&+ 532\,st[t+3\Delta t][3][j] + 294\,st[t+4\Delta t][3][j] - 300\,st[t+5\Delta t][3][j])
\end{aligned}
\tag{6}
$$

$$
\begin{aligned}
f''[t][3][j] = \frac{5}{143(\Delta t)^2}(&st[t-5\Delta t][3][j] + \frac{2}{5}st[t-4\Delta t][3][j] - \frac{1}{15}st[t-3\Delta t][3][j] \\
&- \frac{2}{5}st[t-2\Delta t][3][j] - \frac{3}{5}st[t-\Delta t][3][j] - \frac{2}{3}st[t][3][j] - \frac{3}{5}st[t+\Delta t][3][j] \\
&- \frac{2}{5}st[t+2\Delta t][3][j] - \frac{1}{15}st[t+3\Delta t][3][j] + \frac{2}{5}st[t+4\Delta t][3][j] + st[t+5\Delta t][3][j])
\end{aligned}
\tag{7}
$$

By substituting the modified equation of the temperature derivative term derived above into the discrete equation (5), the accurate temperature value of each point at each time point of the pipe wall can be obtained.

Referring to Fig. 8, Fig.8 is a flow diagram of a method for temperature measuring and transient identifying of an inner wall surface of a straight pipe according to a second embodiment of the present disclosure.

As shown in Fig. 8, in the embodiment, after obtaining the temperature data of the inner wall surface of the pipe, the method further includes:

Step S103, performing a transient identification on the temperature data of the inner wall surface of the pipe to obtain a transient load information of the inner wall surface of the pipe.

In some embodiments, the performing the transient identification on the temperature data of the inner wall surface of the pipe to obtain the transient load information of the inner wall surface of the pipe includes: calculating a temperature change rate of the inner wall surface within a preset time interval based on the temperature data of the inner wall surface of the pipe; judging whether the temperature change rate of the inner wall surface within the preset time interval meets a condition; performing the transient identification by using a first identification method if the temperature change rate of the inner wall surface within the preset time interval meets a first preset condition; performing the transient identification by using a second identification method if the temperature change rate of the inner wall surface within the preset time interval meets a second preset condition.

Wherein, the temperature change rate of the inner wall surface within the preset time interval meeting the first preset condition is: the temperature change rate of the inner wall surface within the preset time interval being greater than zero. The temperature change rate of the inner wall surface within the preset time interval meeting the second preset condition is: the temperature change rate of the inner wall surface within the preset time interval is less than zero.

In some embodiments, the performing the transient identification by using the first identification method if the temperature change rate of the inner wall surface within the preset time interval meets the first preset condition, includes: if the temperature change rate of the inner wall surface within the preset time interval is greater than zero, then: determining the temperature at a first start time and the temperature at a first end time from the preset time interval; obtaining a load time history based on the temperature at the first start time and the temperature at the first end time; performing a linear processing based on the load time history, the temperature at the first start time and the temperature at the first end time, to obtain an interval temperature data between the temperature at the first start time and the temperature at the first end time; performing an adjacent temperature data extraction based on the temperature at the first start time and the temperature at the first end time, to obtain an adjacent temperature data; obtaining the transient load information of the inner wall surface of the pipe based on the interval temperature data and the adjacent temperature data.

Wherein, the performing the linear processing based on the load time history, the temperature at the first start time and the temperature at the first end time includes: performing a linear interpolation processing based on the load time history, the temperature at the first start time and the temperature at the first end time.

In some embodiments, the performing the adjacent temperature data extraction based on the temperature at the first start time and the temperature at the first end time, to obtain the adjacent temperature data, includes: obtaining the temperature data at two seconds before the first start time based on the temperature at the first start time; obtaining the temperature data at two seconds after the first end time based on the temperature at the first end time; and the temperature data at the two seconds before the first start time and the temperature data at two seconds after the first end time being the adjacent temperature data.

In some embodiments, the performing the transient identification by using the second identification method if the temperature change rate of the inner wall surface within the preset time interval meets the second preset condition, includes: if the temperature change rate of the inner wall surface within the preset time interval is less than zero, then: determining the temperature at the second start time and the temperature at the second end time from the preset time interval; obtaining a load time history based on the temperature at the second start time and the temperature at the second end time; performing a linear processing based on the load time history, the temperature at the second start time and the temperature at the second end time, to obtain an interval temperature data between the temperature at the second start time and the temperature at the second end time; performing an adjacent temperature data extraction based on the temperature at the second start time and the temperature at the second end time, to obtain an adjacent temperature data; obtaining the transient load information of the inner wall surface of the pipe based on the interval temperature data and the adjacent temperature data.

Wherein, the performing the linear processing based on the load time history, the temperature at the second start time and the temperature at the second end time includes: performing a linear interpolation processing based on the load time history, the temperature at the second start time and the temperature at the second end time.

In some embodiments, the performing the adjacent temperature data extraction based on the temperature at the second time and the temperature at the second end time, to obtain the adjacent temperature data, includes: obtaining the temperature data at two seconds before the second start time based on the temperature at the second start time; obtaining the temperature data at two seconds after the second end time based on the temperature at the second end time; and the temperature data at the two seconds before the second start time and the temperature data at two seconds after the second end time being the adjacent temperature data.

Specifically, assume that i is within the temperature history T of the inner wall surface within n seconds obtained by modifying and heat conduction calculating the measured temperature of the outer wall surface , wherein i=1, 2, 3,..., n; the time step is 1 second and the preset time interval is 2 seconds, then the transient identification is carried out based on the range value of the temperature change rate of 2 seconds, assuming as Kmax and Kmin, and the screening threshold of 2 seconds as Tv, then the transient identification steps are as follows:

Calculate the temperature change rate K for the time interval of 2 seconds, Ki= (i in T + 2 - i in T) /2.

If Ki>0, then:

Find out the time a when Kmin<Ki<Kmax and Ki+1>Tv first appear from 1 to n, take the temperature at the time as the temperature Ta at the start time of the transient, then find out the time b when Kmin<Ki<Kmax and Ki+1<Tv, take the temperature at the time as the temperature Tb at the end time of the transient, calculate the time interval between Ta and Tb as the load time history m, then perform a linear interpolation between Ta and Tb to obtain the temperature data between Ta and Tb, take another 2 seconds respectively before the start time and after the end time, wherein the temperature data of the 2 seconds before the start time is the same as that of the start time, and the temperature data of the 2 seconds after the end time is the same as that of the end time.

If $K_i<0$, then:

Find out the time a when $-K_{max}<K_i<-K_{min}$ and $K_{i+1}<-T_v$ first appear from 1 to n, take the temperature at the time as the temperature $T_a$ at the start time of the transient, then find out the time b when $-K_{max}<K_i<-K_{min}$ and $K_{i+1}>-T_v$, take the temperature at the time as the temperature $T_b$ at the end time of the transient, calculate the time interval between $T_a$ and $T_b$ as the load time history m, then perform a linear interpolation between $T_a$ and $T_b$ to obtain the temperature data between $T_a$ and $T_b$, take additional 2 seconds respectively before the start time and after the end time, wherein the temperature data of the 2 seconds before the start time is the same as that of the start time, and the temperature data of the 2 seconds after the end time is the same as that of the end time.

Understandably, a steady-state process before and after the transient can be expressed by reading the temperature for an additional two seconds respectively before and after the transient. It should be noted that in order to avoid being affected by the successive occurrence of other transients, the additional time may not be too long, and the additional 2 seconds respectively before and after the transient can not only express the process of the temperature stability, but also do not affect the possible adjacent transients.

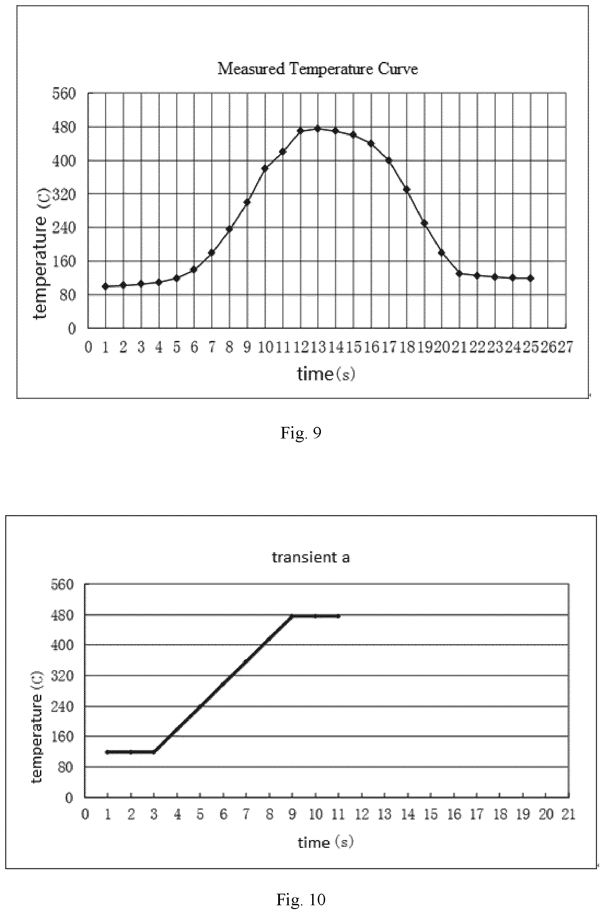

In a specific embodiment, the temperature history diagram of the inner wall surface of the pipe is shown in Fig. 9. By using the above method for transient identification, two transients can be identified, namely, transient a and transient b. The specific information of the transient a and the transient b is shown in Table 1 as below:

Table 1: load of information of transient a and transient b

| transient | load condition t1(°C) | history (s) | load condition t2(°C) | amplitude (°C) |
|---|---|---|---|---|
| a | 119 | 6 | 475 | 356 |
| b | 460 | 5 | 125 | 335 |

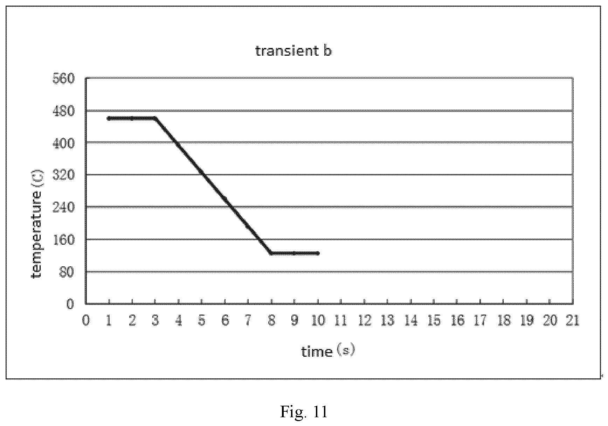

Wherein, the temperature curves of transient a and transient b are respectively shown in Fig. 10 and Fig.11.

The method for temperature measuring and transient identifying of the inner wall surface of the straight pipe in the disclosure can accurately obtain the temperature of the outer wall surface in real time without damaging the pipe of the primary loop; based on the heat conduction inversion analysis method, the measured temperature distribution on the outer wall surface is calculated to provide data input for the thermal stress calculation of fatigue assessment; the problems of repeated iteration and non convergence can be effectively avoided; the calculation time is short and the calculation amount is small; the real transient of the inner wall surface of the pipe can be accurately and quickly identified.

Furthermore, the method for temperature measuring and transient identifying of the inner wall surface of the straight pipe in the disclosure can be applied to the thermal fatigue scenarios of the pipe in nuclear power, thermal power and petrochemical plants due to the mixing of cold and hot fluids, turbulence penetration, valve leakage and other reasons, so as to provide real transient information for the operation of nuclear power plants, meanwhile, it also provides a real data source for subsequent fatigue life assessment and calculation of the pipe, and can also be used as an auxiliary judgment tool for gate valve, stop valve and other leakage.

Further, the disclosure provides a computer terminal, which includes a processor and a memory. The memory is configured to store a computer program, and the processor is configured to execute the computer program stored in the memory to realize the method for temperature measuring and transient identifying of the inner wall surface of the straight pipe disclosed in the disclosure.

Further, the disclosure provides a storage medium in which the computer program is stored. When the computer program is executed by the processor, the method for temperature measuring and transient identifying of the inner wall surface of the straight pipe disclosed in the disclosure is implemented.

The embodiments in the specification are described in a progressive manner. Each embodiment focuses on the differences from other embodiments. The same and similar parts of the embodiment can be referred to each other. The devices disclosed in the embodiments correspond to the method disclosed in the embodiments, therefore the description is relatively simple, and can refer to the descriptions in the section of the method for relevant parts.

Professionals can further realize that the units and algorithm steps of the examples described in connection with the embodiments disclosed herein can be implemented in electronic hardware, computer software or a combination of the two. In order to clearly illustrate the interchangeability of hardware and software, the composition and steps of the embodiments have been generally described in the above description according to functions. Whether these functions are performed in hardware or software depends on the specific application and design constraints of the technical scheme. Professional technicians can use different methods to implement the described functions for each specific application, but such implementation should not be considered beyond the scope of this disclosure.

The steps of the method or algorithm described in connection with the embodiments disclosed herein may be implemented directly with hardware, a software module executed by a processor, or a combination of the two. The software module may be placed in a random access memory (RAM), a memory, a read only memory (ROM), an electrically programmable ROM, an electrically erasable programmable ROM, a register, a hard disk, a removable disk, a CD-ROM, or any other form of storage medium known in the art.

The foregoing embodiments only describe exemplary implementations of the present disclosure specifically and in detail, but cannot be construed as a limitation to the patent scope of the present disclosure. It should be noted that a person of ordinary skill in the art may further make free combination to the foregoing technical features and further make several variations and improvements without departing from the concept of the present disclosure, and these variations and improvements all fall within the protection scope of the present disclosure. Therefore, any equivalent change or modification made according to the scope of the claims of the present disclosure shall fall within the scope of the claims of the present disclosure.

## Claims

1. A method for temperature measuring and transient identifying of an inner wall surface of a straight pipe, **characterized by** comprising:

   obtaining a measured temperature data of an outer wall surface of the pipe; and
   performing a thermal conduction inversion calculation by using a preset method based on the measured temperature data of the outer wall surface, to obtain a temperature data of the inner wall surface of the pipe.

2. The method for temperature measuring and transient identifying of the inner wall surface of the straight pipe of claim 1, wherein the obtaining the measured temperature data of the outer wall surface of the pipe comprises:

   obtaining a type of the pipe;
   determining a measuring mode of a temperature measuring device according to the type of the pipe; and
   performing a temperature measurement according to the measuring mode of the temperature measuring device, to obtain the measured temperature data of the outer wall surface.

3. The method for temperature measuring and transient identifying of the inner wall surface of the straight pipe of claim 2, wherein the types of the pipe comprise a first pipe, a second pipe, and a third pipe;

   wherein the first pipe is a pipe with a uniformly stirred state therein;
   wherein the second pipe is a pipe with a thermally stratified state therein; and
   wherein the third pipe is a pipe with partial fluid therein.

4. The method for temperature measuring and transient identifying of the inner wall surface of the straight pipe of claim 3, wherein the determining the measuring mode of the temperature measuring device according to the type of the pipe comprises:

   if the pipe is the first pipe, disposing one temperature measuring device respectively on the top and the bottom of the first pipe;
   if the pipe is the second pipe, uniformly disposing a plurality of the temperature measuring devices on a side of the second pipe; and
   if the pipe is the third pipe, disposing a plurality of the temperature measuring devices on the right side of the third pipe.

5. The method for temperature measuring and transient identifying of the inner wall surface of the straight pipe of claim 1, wherein before the performing the thermal conduction inversion calculation by using the preset method based on the measured temperature data of the outer wall surface, to obtain the temperature data of the inner wall surface of the pipe, the method further comprises:
   modifying the measured temperature data of the outer wall surface to obtain a modified measured temperature data of the outer wall surface of the pipe.6. The method for temperature measuring and transient identifying of the inner wall surface of the straight pipe of claim 5, wherein the modifying the measured temperature data of the outer wall surface to obtain the modified measured temperature data of the outer wall surface of the pipe comprises:

   dividing temperature ranges;
   determining modified values of different temperature ranges based on the divided temperature ranges; and

modifying the measured temperature data of the outer wall surface based on the modified values of different temperature ranges, to obtain the modified measured temperature data of the outer wall surface.

**7.** The method for temperature measuring and transient identifying of the inner wall surface of the straight pipe of claim 5, wherein the performing the thermal conduction inversion calculation by using the preset method based on the measured temperature data of the outer wall surface, to obtain the temperature data of the inner wall surface of the pipe comprises:

performing an inverse-space gradually marching algorithm by a control volume method based on the modified measured temperature data of the outer wall surface, to obtain the temperature data of the inner wall surface of the pipe.

**8.** The method for temperature measuring and transient identifying of the inner wall surface of the straight pipe of claim 7, wherein the performing the inverse-space gradually marching algorithm by the control volume method based on the modified measured temperature data of the outer wall surface, to obtain the temperature data of the inner wall surface of the pipe comprises:

conducting a node division on a wall of the pipe based on the temperature distribution of the wall of the pipe in a radial direction of the pipe, to obtain pipe nodes.

**9.** The method for temperature measuring and transient identifying of the inner wall surface of the straight pipe of claim 8, wherein the pipe nodes comprises an outer wall node, an intermediate layer nodes, and an inner wall node;

wherein the temperature data of the outer wall node is the modified measured temperature data of the outer wall surface; and
wherein the temperature data of the inner wall node is the temperature data of the inner wall surface.

**10.** The method for temperature measuring and transient identifying of the inner wall surface of the straight pipe of claim 9, wherein the performing the inverse-space gradually marching algorithm by the control volume method based on the modified measured temperature data of the outer wall surface, to obtain the temperature data of the inner wall surface of the pipe comprises:

obtaining energy conservation equations of the temperature data of the outer wall node, the temperature data of the intermediate layer nodes and the temperature data of the inner wall node, according to the law of energy conservation;
performing a derivation calculation based on the energy conservation equations and the temperature data of the outer wall node, to obtain a calculated temperature value of the inner wall surface of the pipe; and

modifying the calculated temperature value of the inner wall surface to obtain a modified temperature value of the inner wall surface of the pipe; the modified temperature value of the inner wall surface of the pipe being the temperature data of the inner wall surface of the pipe. 11. The method for temperature measuring and transient identifying of the inner wall surface of the straight pipe of claim 10, wherein the modifying the calculated temperature value of the inner wall surface to obtain the modified temperature value of the inner wall surface of the pipe comprises:

modifying the temperature data of the outer wall node and a high-order derivative of the temperature data of the outer wall node versus time, to obtain a high-order modified value of the temperature data of the outer wall node; and
modifying the calculated temperature value of the inner wall surface of the pipe based on the high-order modified value of the temperature data of the outer wall node, to obtain the modified temperature value of the inner wall surface of the pipe.

**12.** The method for temperature measuring and transient identifying of the inner wall surface of the straight pipe of any one of claims 1 to 11, wherein after obtaining the temperature data of the inner wall surface of the pipe, the method further comprises:

performing a transient identification on the temperature data of the inner wall surface of the pipe to obtain a transient load information of the inner wall surface of the pipe. 13. The method for temperature measuring and transient identifying of the inner wall surface of the straight pipe of claim 12, wherein the performing the transient identification on the temperature data of the inner wall surface of the pipe to obtain the transient load information of the inner wall surface of the pipe comprises:

calculating a temperature change rate of the inner wall surface within a preset time interval based on the temperature data of the inner wall surface of the pipe;

judging whether the temperature change rate of the inner wall surface within the preset time interval meets a condition;

performing the transient identification by using a first identification method if the temperature change rate of the inner wall surface within the preset time interval meets a first preset condition; and

performing the transient identification by using a second identification method if the temperature change rate of the inner wall surface within the preset time interval meets a second preset condition.

**14.** The method for temperature measuring and transient identifying of the inner wall surface of the straight pipe of claim 13, wherein the temperature change rate of the inner wall surface within the preset time interval meets the first preset condition being that the temperature change rate of the inner wall surface within the preset time interval is greater than zero;

wherein the temperature change rate of the inner wall surface within the preset time interval meets the second preset condition being that the temperature change rate of the inner wall surface within the preset time interval is less than zero.

**15.** The method for temperature measuring and transient identifying of the inner wall surface of the straight pipe of claim 14, wherein the performing the transient identification by using the first identification method if the temperature change rate of the inner wall surface within the preset time interval meets the first preset condition comprises:

if the temperature change rate of the inner wall surface within the preset time interval is greater than zero, then:

determining the temperature at a first start time and the temperature at a first end time from the preset time interval;

obtaining a load time history based on the temperature at the first start time and the temperature at the first end time;

performing a linear processing based on the load time history, the temperature at the first start time and the temperature at the first end time, to obtain an interval temperature data between the temperature at the first start time and the temperature at the first end time;

performing an adjacent temperature data extraction based on the temperature at the first start time and the temperature at the first end time, to obtain an adjacent temperature data; and

obtaining a transient load information of the inner wall surface of the pipe based on the interval temperature data and the adjacent temperature data.

**16.** The method for temperature measuring and transient identifying of the inner wall surface of the straight pipe of claim 15, wherein the performing the linear processing based on the load time history, the temperature at the first start time and the temperature at the first end time comprises:

performing a linear interpolation processing based on the load time history, the temperature at the first start time and the temperature at the first end time.

**17.** The method for temperature measuring and transient identifying of the inner wall surface of the straight pipe of claim 15, wherein the performing the adjacent temperature data extraction based on the temperature at the first start time and the temperature at the first end time, to obtain the adjacent temperature data comprises:

obtaining the temperature data at two seconds before the first start time based on the temperature at the first start time; and

obtaining the temperature data at two seconds after the first end time based on the temperature at the first end time; the temperature data at the two seconds before the first start time and the temperature data at two seconds after the first end time being the adjacent temperature data.

**18.** The method for temperature measuring and transient identifying of the inner wall surface of the straight pipe of claim 14, wherein the performing the transient identification by using the second identification method if the temperature change rate of the inner wall surface within the preset time interval meets the second preset condition comprises:

if the temperature change rate of the inner wall surface within the preset time interval is less than zero, then:

determining the temperature at a second start time and the temperature at a second end time from the preset time interval;

obtaining a load time history based on the temperature at the second start time and the temperature at the second end time;

performing a linear processing based on the load time history, the temperature at the second start time and the temperature at the second end time, to obtain an interval temperature data between the temperature at the second start time and the temperature at the second end time;

performing an adjacent temperature data extraction based on the temperature at the second start time and the temperature at the second end time, to obtain an adjacent temperature data; and

obtaining a transient load information of the inner wall surface of the pipe based on the interval temperature data and the adjacent temperature data.

**19.** The method for temperature measuring and transient identifying of the inner wall surface of the straight pipe of claim 18, wherein the performing the linear processing based on the load time history, the temperature at the second start time and the temperature at the second end time comprises:

performing a linear interpolation processing based on the load time history, the temperature at the second start time and the temperature at the second end time.

**20.** The method for temperature measuring and transient identifying of the inner wall surface of the straight pipe of claim 18, wherein the performing the adjacent temperature data extraction based on the temperature at the second start time and the temperature at the second end time, to obtain the adjacent temperature data comprises:

obtaining the temperature data at two seconds before the second start time based on the temperature at the second start time; and

obtaining the temperature data at two seconds after the second end time based on the temperature at the second end time; the temperature data at the two seconds before the second start time and the temperature data at two seconds after the second end time being the adjacent temperature data.

**21.** A computer terminal, **characterized by** comprising:

a processor; and

a memory;

wherein the memory is configured to store a computer program, and

wherein the processor is configured to execute the computer program stored in the memory to realize the method for temperature measuring and transient identifying of the inner wall surface of the straight pipe of any one of claims 1 to 20.

**22.** A storage medium, in which a computer program is stored, wherein when the computer program is executed by a processor, the steps of realizing the method for temperature measuring and transient identifying of the inner wall surface of the straight pipe of any one of claims 1 to 20 are realized.

obtaining a measured temperature data of an outer wall surface of the pipe ⎯S101

performing a thermal conduction inversion calculation by using a preset method based on the measured temperature data of the outer wall surface, to obtain a temperature data of the inner wall surface of the pipe ⎯S102

Fig. 1

insulation layer

thermocouple

wall of pipe

pipe

T0

T1

T2

T...

Tn

360°/n

Fig. 2

fastening device    thermocouple    thermocouple fixed    hook and clamp connector
U-shaped clamp

Fig. 3

| | |
|---|---|
| 0~100□ | +0.8□ |
| 100~200□ | +1.3□ |
| 200~300□ | +4□ |
| 300~400□ | +5□ |
| 400~480□ | +7□ |

divisions of temperature ranges

update modified value

measured temperature value of outer wall surface

actual value=measured value+ modified value

Fig. 4

Fig. 5

Fig. 6

T25

T14    T24    T34

T23

Fig. 7

obtaining a measured temperature data of an outer wall surface of the pipe    S101

performing a thermal conduction inversion calculation by using a preset method based on the measured temperature data of the outer wall surface, to obtain a temperature data of the inner wall surface of the pipe    S102

performing a transient identification on the temperature data of the inner wall surface of the pipe to obtain a transient load information of the inner wall surface of the pipe    S103

Fig. 8

Fig. 9

Fig. 10

Fig. 11

<table>
<tr><td colspan="2" align="center">**INTERNATIONAL SEARCH REPORT**</td><td colspan="2">International application No.<br><br>**PCT/CN2021/103333**</td></tr>
</table>

**A. CLASSIFICATION OF SUBJECT MATTER**

G06F 30/20(2020.01)i; G01K 1/14(2021.01)i; G06F 113/14(2020.01)i; G06F 119/08(2020.01)i

According to International Patent Classification (IPC) or to both national classification and IPC

**B. FIELDS SEARCHED**

Minimum documentation searched (classification system followed by classification symbols)

G06F; G01K

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 中广核, 管道, 外壁, 内壁, 导热, 反演, 温度, 控制容积, 能量守恒, 修正, 瞬态载荷, pipe, outer wall, inner wall, heat conduction, inversion, temperature, control volume, energy conservation, correction, transient load

**C. DOCUMENTS CONSIDERED TO BE RELEVANT**

| Category* | Citation of document, with indication, where appropriate, of the relevant passages | Relevant to claim No. |
|---|---|---|
| PX | CN 112765797 A (SHENZHEN CHINA NUCLEAR POWER DESIGN CO., LTD. et al.) 07 May 2021 (2021-05-07)<br>claims 1-22, description paragraphs [0090]-[0175] | 1-22 |
| X | CN 106092351 A (CHINA NUCLEAR POWER ENGINEERING CO., LTD. et al.) 09 November 2016 (2016-11-09)<br>description paragraphs [0055]-[0087] | 1-6, 12-22 |
| X | CN 108804739 A (DATANG ENVIRONMENTAL INDUSTRY GROUP CO., LTD. et al.) 13 November 2018 (2018-11-13)<br>description paragraphs [0056]-[0119] | 1-6, 12-22 |
| X | CN 108489546 A (DATANG ENVIRONMENTAL INDUSTRY GROUP CO., LTD. et al.) 04 September 2018 (2018-09-04)<br>description paragraphs [0064]-[0133] | 1-6, 12-22 |
| Y | CN 106092351 A (CHINA NUCLEAR POWER ENGINEERING CO., LTD. et al.) 09 November 2016 (2016-11-09)<br>description paragraphs [0055]-[0087] | 7-11 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2021** | **26 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/103333**

**C.** **DOCUMENTS CONSIDERED TO BE RELEVANT**

| Category* | Citation of document, with indication, where appropriate, of the relevant passages | Relevant to claim No. |
|---|---|---|
| Y | CN 108804739 A (DATANG ENVIRONMENTAL INDUSTRY GROUP CO., LTD. et al.) 13 November 2018 (2018-11-13) description paragraphs [0056]-[0119] | 7-11 |
| A | CN 108072428 A (CHENGDU QINCHUAN IOT TECHNOLOGY CO., LTD.) 25 May 2018 (2018-05-25) entire document | 1-22 |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br>**PCT/CN2021/103333**</td></tr>
</table>

| Patent document cited in search report | | | Publication date (day/month/year) | Patent family member(s) | | | Publication date (day/month/year) |
|---|---|---|---|---|---|---|---|
| CN | 112765797 | A | 07 May 2021 | None | | | |
| CN | 106092351 | A | 09 November 2016 | CN | 106092351 | B | 02 July 2019 |
| CN | 108804739 | A | 13 November 2018 | None | | | |
| CN | 108489546 | A | 04 September 2018 | None | | | |
| CN | 108072428 | A | 25 May 2018 | None | | | |

Form PCT/ISA/210 (patent family annex) (January 2015)